# EUROPÄISCHE PATENTANMELDUNG

(11) **EP 2 332 415 A2**
(43) Veröffentlichungstag der Anmeldung: **15.06.2011**
(21) Anmeldenummer: 10015279.2
(22) Anmeldetag: 03.12.2010
(51) Int. Cl.: A22B 5/00, A22C 17/00

(54) **Verfahren zur Zerlegung von Schlachttierkörpern**

(30) Priorität: 10.12.2009 DE 102009057756
(71) Anmelder: CSB-System AG, 52511 Geilenkirchen (DE)
(72) Erfinder: Schimitzek, Peter, 52511 Geilenkirchen (DE)
(74) Vertreter: Weihrauch, Frank

(57) **Zusammenfassung**

Es wird ein computergestütztes Verfahren zur manuellen und/oder automatisierten Zerlegung von Schlachttierkörpern beschrieben, das die günstigsten Schnittführungen zur Zerlegung in Form von visuellen Anweisungen ausgibt und/oder zur Steuerung von Schnittwerkzeugen von Zerlegeautomaten dient, wobei die Zerlegung bei definierter Vorgabe von Mengen unterschiedlicher Zerlegeartikel als Endprodukte aus einer minimale Menge von Ausgangsartikeln bei Anfall geringer Mengen von übrigen Artikeln mittels einer optimalen Zerlegevorschrift mit Schnittlisten und Schnittführungen auf Basis von in einer Datenbank abgelegter Schnittlisten sowie Daten von Ausbeuten von Schlachttierkörpern, erfolgen soll.

Erfindungsgemäß werden in mehreren Schritten zur Bestimmung der optimalen Schnittführungen, ausgehend von definiert vorgegebenen Mengen unterschiedlicher Artikel, alle unbekannten Parameter von im Verlauf der Zerlegung entstehender Mengen an unterschiedlichen Artikeln anderer Endprodukte, Zukaufs- und Einlagerungsmengen variiert, wobei jeder zu variierende Parameter drei Werte, als Zahlentripel zur Berechnung einer Anzahl von Variationen durchläuft, auf jede der Variationen ein Optimierungskriterium angewandt und die nach diesem Kriterium vorläufig beste Variation bestimmt wird, ausgehend von den ersten Zahlentripel werden neue Werte für jeden Parameter festgelegt, deren Abstände geringer sind, mit stets kleiner werdendem Abstand der Werte der Zahlentripel wird die Berechnung so oft wiederholt, bis die Werte der Parameter innerhalb eines vorgegebenem Toleranzbereichs liegen und die der optimalen Zerlegevorschrift in der Datenbank zugeordneten Schnittlisten werden visuell lesbar oder als Steuerdatei ausgegeben.

## Beschreibung

Die Erfindung bezeichnet ein computergestütztes Verfahren zur manuellen oder/und automatisierten Zerlegung von Schlachttierkörpern in definiert vorgegebene Mengen unterschiedlicher Artikel.

Die Zerlegung von Schlachttierkörpern und/oder deren Hälften als Ausgangsartikel in unterschiedlichste Zerlegeartikel wie Grobteile in Form von Vierteln oder Keulen und/oder in Endprodukte als Stück- oder Gewichtsartikel, wie Koteletten oder Schinken, erfolgt üblicherweise manuell und/oder automatisch mit Hilfe von Zerlegeplänen, deren Schnittlisten angezeigt oder ausgegeben oder direkt zur Steuerung von Zerlegeautomaten genutzt werden.

Zerlegepläne enthalten eine Anzahl von Schnittlisten mit unterschiedlichen Schnittführungen. Die beim Zerlegen auszuführenden Schnitte sind unter Einbeziehung ökonomischer Aspekte bekanntermaßen abhängig von den Qualitäten und Quantitäten des Ausgangsartikels sowie den für eine Bedarfsdeckung erforderlichen Artikeln als Endprodukte.

Durch unterschiedliche Schnittführungen können gleiche Zerlegeartikel aus unterschiedlichen Teilstücken eines Schlachttierkörpers sowie unterschiedliche Gewichte eines gleichen Zerlegeartikels erzielt werden, wodurch sich auch unterschiedliche Ausbeutemöglichkeiten ergeben, über die ein maximal möglicher Marktwert für den konkreten Zerlegeartikel erzielt werden kann.

In der Druckschrift DE 25 42 247 A1 wird ein solches Verfahren zur Schweineverarbeitung beschrieben, bei dem die Tierkörperhälfte durch Auswahl einer bestimmten Schnittführung unter Nutzung mathematischer Modelle oder von Berechnungen auf Basis von Variablen, die aus Messungen einer genügenden Anzahl von Schlachttierkörpern und durch multiple Regressionsanalysen bestimmt wurden, so zerlegt wird, dass die gewünschten Zerlegeartikel den größten Gewinn erzielen, jedoch eine Bedarfsdeckung keine Berücksichtigung findet.

Aus der Druckschrift DE 603 07 440 T2 geht ein Verfahren und System zur Überwachung der Verarbeitung von Objekten, wie Schlachtkörpern von Schweinen und Rindern hervor. Es erfolgt an Arbeitsstationen ein zweckdienliches Zerteilen von Fleischstücken unter Berücksichtigung von Kundenanforderungen und aktualisierten Ausbeutedaten, die bei früheren und/oder der jetzigen Verarbeitung registriert wurden. An der jeweiligen Arbeitsstation werden beispielsweise über einen Monitor spezifische visuelle Anweisungen ausgegeben, wie das Zerteilen des konkreten Objekts erfolgen soll. Diese Anweisungen werden auf der Grundlage von vorher am jeweilig zu zerlegenden Schlachttier ermittelter Parameter von einem Computersystem geliefert, dem die Kundenaufträge bekannt sind und in dem auch die Schneideregeln hinterlegt sind.

In Verbindung mit dem Zerlegen kann eine Qualitätskontrolle durch Verwendung einer Sichteinrichtung mit Speicherung der entsprechenden Daten, wie Videosequenzen oder Einzelbildern in einer Datenbank erfolgen.

Zur Rückverfolgung ist eine Kennzeichnung der einzelnen Fleischstücke vorgesehen.

Des Weiteren wird in der Druckschrift DE 39 27 145 A1 ein Verfahren und Vorrichtung zum automatischen Zerlegen von Schlachtkörpern offenbart.

Die Schnittpositionen werden danach aufgrund der anatomischen Maße des individuellen Schlachtkörpers und eines in einem Rechner gespeicherten Programms festgelegt und zur Steuerung von Schnittwerkzeugen genutzt.

Durch Vorgaben des Bedarfs für spezielle Absatzmärkte oder des Preises kann gesteuert werden, welche Art der Zerlegung des individuellen Schlachttierkörpers erfolgen soll.

Die in den Dokumenten beschriebenen Verfahren erwähnen zwar die Berücksichtigung von Kundenanforderungen beim Zerlegen von Schlachttierkörpern an Hand von individuellen Schnittlisten, zeigen jedoch keine Schritte zur eigentlichen Optimierung des Gesamtprozesses der Zerlegung auf.

Die Aufgabe der Erfindung besteht darin, ein computergestütztes Verfahren zur manuellen und/oder automatisierten Zerlegung von Schlachttierkörpern zu entwickeln, das die günstigsten Schnittführungen zur Zerlegung in Form von visuellen Anweisungen ausgibt und/oder zur Steuerung von Schnittwerkzeugen von Zerlegeautomaten dient, wobei die Zerlegung mittels einer optimalen Zerlegevorschrift mit Schnittlisten und Schnittführungen auf Basis von in einer Datenbank abgelegter Schnittlisten sowie Daten von Ausbeuten, die aus einer genügenden Anzahl von Zerlegeversuchen von Schlachttierkörpern gewonnen worden sind, erfolgen soll. Die optimale Zerlegevorschrift soll es dabei ermöglichen, bei definierter Vorgabe von Mengen unterschiedlicher Zerlegeartikel als Endprodukte eine minimale Menge von Ausgangsartikeln einzusetzen, geringe Mengen von übrigen Artikeln mit anfallen zu lassen, sowie definiert vorgegebene Stück- und/oder Gewichtsanteile einzelner Zerlegeartikel zu erzielen.

Die Aufgabe wird durch die im Patentanspruch 1 aufgeführten Merkmale gelöst. Bevorzugte Weiterbildungen ergeben sich aus den Unteransprüchen.

Ein erfindungsgemäßes computergestütztes Verfahren zur manuellen und/oder Steuerung einer automatisierten Zerlegung einer Anzahl von ganzen oder halben Schlachttierkörpern oder von Grobteilen derselben als Ausgangsartikel stellt Schnittlisten mit optimalen Schnittführungen als Hardcopy oder auf einer Bildwiedergabeeinrichtung dar oder gibt diese als Steuerdatei für Schnittwerkzeuge aus, wobei die Schnittlisten ausgehend von der Vorgabe einer definierten Menge von bestimmten Artikeln in Form von Endprodukten, die in der Regel nicht weiter zerlegbar sind, unter Einbeziehung von Optimierungskriterien ermittelt worden sind.

Bei der Zerlegung mittels verschiedener Schnittvarianten, nach denen die Ausgangsartikel zerlegt werden können, entstehen unterschiedliche Grobteile und Endprodukte sowie unterschiedliche Mengen davon.

Die verschiedenen Schnittvarianten mit den entsprechenden Schnittlisten, mit den sich nach den einzelnen Schnittplänen in der Reihenfolge vom Ausgangsartikel über Grobteile bis zum Endprodukt ergebenden Artikeln als Ausbeute, sind in einer Datenbank abgelegt.

Dem jeweiligen Artikel zugeordnet sind ebenfalls dessen Preise und Gewicht sowie optional die spezifischen Kosten der Zerlegung abgelegt.

Der vorgegebene Bedarf an bestimmten Artikeln lässt sich aus einer Menge von Ausgangsartikeln bei optimaler Zerlegung nicht immer decken, so dass es günstiger sein kann, Grobteile und/oder Endprodukte am Markt zuzukaufen.

Im Verlauf des Zerlegens entstehen, ausgehend von der Vorgabe definierter Mengen unterschiedlicher Artikel als Endprodukte, zwangsläufig unterschiedliche Artikel anderer Endprodukte mit, für die aktuell kein Bedarf besteht.

Die Mengen dieser anderen Endprodukte soll möglichst gering sein.

Die Bestimmung der optimalen Zerlegevorschrift mit den Schnittlisten mit optimalen Schnittführungen erfolgt computergestützt, indem die Mengen der im Verlauf der Zerlegung anfallenden anderen Endprodukte als zu variierender Parameter berücksichtigt wird.

Die bei der Zerlegung mit anfallenden Mengen anderer Endprodukte, die für die Erfüllung der Vorgabe definierter Mengen an unterschiedlichen Artikeln nicht erforderlich sind, können beispielweise eingelagert werden.

Des Weiteren werden die erforderlichen Zukaufsmengen bestimmter Artikel als zu variierende Parameter zur computergestützten Bestimmung des optimalen Zerlegeplans von Ausgangsartikeln zur Erfüllung der Vorgaben definierter Mengen an unterschiedlichen Endprodukten, einbezogen.

Zur computergestützten Bestimmung des optimalen Zerlegeplans werden zunächst alle unbekannten Größen in Form von Parametern variiert und danach wird die beste Variation ausgewählt.

Für die zu variierenden Parameter werden drei festgelegte Werte zur Berechnung einer Anzahl von Variationen in einem ersten Schritt durchlaufen.

Es werden dazu für jeden Parameter ein minimaler, ein mittlerer und ein maximaler Wert festgelegt, die ein Zahlentripel bilden.

In besonderen Fällen kann auch nur ein minimaler und ein maximaler Wert festgelegt werden, wodurch der Parameter nur dieses Zahlenpaar durchläuft.

Ist die Variation von bestimmten Parametern nicht gewünscht, so werden für diese feste Werte vorgegeben.

Sollte beispielsweise der Zukauf von einigen oder allen Grobteilen am Markt ausgeschlossen werden, so erhält dessen Parameter den Wert Null.

Auf die im ersten Schritt berechneten Variationen wird zur Bestimmung einer vorläufig besten Variation ein Optimierungskriterium, wie der Anfall von möglichst geringen Mengen anderer Artikel als Endprodukte bei der Zerlegung, der gewünschte Gewichts- oder Stückanteil in der Menge bestimmter Artikel und/oder ein günstiges finanzielles Ergebnis aus der Summe des Marktwerts der Zerlegeartikel, vorgegeben und in der Berechnung angewandt.

Im Ergebnis dieses zweiten Schritts haben die Parameter den minimalen, mittleren oder maximalen Wert der Zahlentripel oder alternativ den minimalen oder maximalen Wert des Zahlenpaares angenommen.

In Abhängigkeit von dem jeweils angenommenen Wert der Parameter werden in einem dritten Schritt neue Werte für die Zahlentripel oder Zahlenpaare festgelegt, deren Abstände kleiner sind als in den ursprünglichen Zahlentripeln oder Zahlenpaaren. Die Berechnung zur Bestimmung der optimalen Zerlegepläne wird mit dem zuvor ausgewählten Kriterium erneut ausgeführt.

Der dritte Schritt wird mehrfach unter Verringerung der Abstände zwischen den Werten der Zahlentripel oder Zahlenpaare der Parameter ausgeführt.

Die angenommenen Werte der Parameter konvergieren zunehmend mit jeder Wiederholung der Berechnung.

Das Optimum ist erreicht, wenn die Werte der Parameter innerhalb eines vorgegebenen Toleranzbereiches liegen und die dazugehörigen Schnittlisten mit den optimalen Schnittführungen werden als Darstellung oder Steuerdatei ausgegeben.

Zur Erzielung einer akzeptablen Rechenzeit erfolgt eine Begrenzung der Anzahl der Wiederholungen der Berechnung zur Bestimmung der optimalen Parameter der Zerlegung, damit der auszuwählenden Schnittvariante mit Schnittlisten als Zerlegeplan, entsprechend des gewählten Optimierungskriteriums, auf maximal 55.

Mit Hilfe einer Matrix erfolgt die Berechnung der Ausbeute der Mengen unterschiedlicher Artikel bei der Zerlegung und die eigentliche Berechnung zur Bestimmung der optimalen Zerlegevorschrift zur Erfüllung der Vorgaben an definierten Mengen unterschiedlicher Artikel bei der Zerlegung.

Als Beispiel für eine solche Matrix wird nachfolgend eine einfach aufgebaute Schnittmatrix beschrieben.

Die unterschiedlichen Zerlegepläne werden in Form einer Anzahl von alternativen Schnittlisten in einer zweidimensionalen Schnittmatrix abgebildet, die Informationen darüber enthält, welche unterschiedlichen Artikel in welcher Menge bei der Zerlegung von Ausgangsartikeln in Form von ganzen oder halben Schlachttierkörpern oder deren Grobteile und nach deren alternativen Schnittvarianten als Zwischen- oder/und Endprodukte entstehen.

In den Spalten der Matrix sind die im Zerlegeprozeß entstehenden Mengen unterschiedlicher Artikel enthalten, wobei deren Index von Spalte 0 bis Spalte n, ausgehend vom ganzen Schlachttierkörper, über den halben Schlachttierkörper und Grobteile bis zu unterschiedlichen Endprodukten, läuft.

Jede Zeile entspricht der Zerlegung eines Grobteils in eine konkrete Menge anderer Grobteile und/oder Endprodukte, womit eine Schnittvariante nach einer Schnittliste, die unterschiedliche Schnittführungen beinhaltet, abgebildet wird und die in der Reihenfolge der Zerlegung eines Ausgangsartikels entstehenden unterschiedlichen Artikel und deren jeweilige Menge mit jeweils höherem Index benannt sind.

Bei einer eindeutigen Zerlegung eines Grobteils gibt es für dieses nur eine Zeile, bei n alternativen Schnittvarianten demzufolge n Zeilen.

Die Schnittmatrix besteht somit für jedes Grobteil aus mehreren Teilschnittmatrizen gleicher Spaltenzahl.

Mit steigendem Spaltenindex geht aus den ersten Spalten hervor, welche unterschiedlichen Artikel in welcher Anzahl beim Zerlegen eines Ausgangsartikels entstehen.

Ausgangsartikel können ganze oder halbe Schlachttierkörper oder deren Grobteile sein.

In den nachfolgenden Spalten sind Art und Anzahl der beim Zerlegen von Ausgangsartikeln entstehenden, nicht weiter zu zerlegende Artikel als unterschiedliche Endprodukte in Form der Elemente der Matrix enthalten.

Der Index läuft in Abhängigkeit von der Anzahl aller möglichen Schnittvarianten zum Zerlegen eines Schlachttierkörpers von Zeile 0 bis Zeile n.

Beispielsweise kann die nullte Zeile nur die Zerlegung eines ganzen Schweins, in Spalte 0 mit Elementwert -1, als innerer Verbrauch, in zwei identische Hälften, die nicht weiter zerlegt werden sollen, mit Elementwert 2 in Spalte 1, abbilden, und die restlichen Elemente in den Spalten haben dabei den Wert Null.

In der nächsten Zeile wird die Zerlegung einer Hälfte, mit dem Elementwert -1 in Spalte 1, in zwei weitere Grobteile, mit Elementen vom Wert 1 in den Spalten 2 und 3, beschrieben.

Für das erste Teil in Spalte 2, dem Index 2, soll es drei alternative Schnittvarianten geben, demzufolge existiert eine Teilschnittmatrix mit drei Zeilen.

In Abhängigkeit davon, welche Schnittvariante für die weitere Zerlegung dieses ersten Teils angewandt wird, entstehen unterschiedliche Artikel und Artikelmengen von Endprodukten.

Die Berechnung zur Bestimmung der optimalen Zerlegevorschrift zur Erfüllung der Vorgabe definierter Mengen unterschiedlicher Endprodukte kann dann aus der Multiplikation von Elementen der Zeilen mit einem Faktor zum Beispiel ergeben, dass drei erste Teile mit dem Index 2 nach der ersten Variante, zwei nach der zweiten Variante und eines nach der Variante drei zu zerlegen sind.

Die der optimalen Zerlegevorschrift in der Datenbank zugeordneten Schnittlisten, mit den sich nach den einzelnen Schnittplänen und Schnittführungen in der Reihenfolge vom Ausgangsartikel über Grobteile bis zum Endprodukt ergebenden Artikeln werden in Form einer Hardcopy ausgegeben oder angezeigt oder als Datei zur Steuerung von Schnittwerkzeugen von Zerlegeautomaten ausgegeben.

In Analogie zur Schnittmatrix kann auch eine Matrix erstellt werden, die in den Zeilen die prozentuale Verteilung der Gewichtsanteile der einzelnen, unterschiedlichen Artikel bei der Zerlegung nach der jeweiligen Schnittvariante abbildet.

Das beschriebene Verfahren ist vorzugsweise integraler Bestandteil eines ERP (Enterprise Ressource Planning) - Systems und mit dessen Modulen, wie Auftragsbearbeitung, Produktionsplanung, Lagerhaltung und Abrechnung, verknüpft.

Die Vorteile der Erfindung bestehen insbesondere darin, dass mit den ermittelten optimalen Zerlegevorschriften die Vorgaben definierter Mengen unterschiedlicher Artikel als Endprodukte aus der geringst möglichen Menge von Ausgangsartikeln, bei Anfall geringer Mengen anderer Artikel als Endprodukte, erfüllt werden und ein günstigstes merkantiles Ergebnis erzielt wird.

Bei der Berechnung zur Bestimmung des optimalen Zerlegeplans können neben Schnittvarianten, Gewichten und Stückzahlen weitere Einfluss- und Parametergrößen, wie Preise und spezifische Kosten der Zerlegung, berücksichtigt und in n-dimensionalen Matrizen abgebildet werden, wodurch komplexe Berechnungen zur Bestimmung von optimalen Zerlegeplänen mit deren visueller Darstellung und Ausgabe als Datei möglich sind.

Mit der logischen Abfolge der Zerlegung von Ausgangsartikeln, wie ganze oder halbe Schlachttierkörper, über Grobteile oder aus deren Grobteilen bis zu den unterschiedlichen Artikeln als Endprodukte, ist gleichzeitig die Rückverfolgbarkeit jedes einzelnen Artikels gewährleistet.

## Patentansprüche

1. Computergestütztes Verfahren zur manuellen oder/und automatisierten Zerlegung von Ausgangsartikeln in Form von ganzen oder halben Schlachttierkörpern oder deren Grobteile in definiert vorgegebene Mengen von unterschiedlichen Artikeln als Endprodukte, wobei die Zerlegung anhand von Schnittlisten mit optimalen Schnittführungen erfolgt, die als Hardcopy ausgegeben oder auf einer Bildwiedergabeeinrichtung darstellt oder als Steuerdatei ausgegeben werden, **dadurch gekennzeichnet,**
**dass** in einem ersten Schritt zur Bestimmung der Schnittlisten mit optimalen Schnittführungen, ausgehend von definiert vorgegebenen Mengen unterschiedlicher Artikel als Endprodukte, alle unbekannten Parameter von im Verlauf der Zerlegung mit entstehender Mengen an unterschiedlichen Artikeln anderer Endprodukte, als für die Erfüllung der Vorgaben nicht erforderliche Artikel, Zukaufs- und Einlagerungsmengen variiert werden, wobei jeder zu variierende Parameter drei Werte, einen minimalen, einen mittleren und einen maximalen Wert als Zahlentripel zur Berechnung einer Anzahl von Variationen durchläuft;
**dass** in einem zweiten Schritt auf jede der Variationen aus dem ersten Schritt ein Optimierungskriterium angewandt und die nach diesem Kriterium vorläufig beste Variation bestimmt wird;
**dass**, ausgehend von den Zahlentripel des ersten Schritts in einem dritten Schritt neue Werte für jeden Parameter festgelegt werden, deren Abstände geringer als im ersten Schritt sind;
**dass** der dritte Schritt mit stets kleiner werdendem Abstand der Werte der Zahlentripel so oft wiederholt wird, bis die Werte der Parameter innerhalb eines vorgegebenem Toleranzbereichs liegen und;
**dass** als letzter Schritt die der optimalen Zerlegevorschrift in der Datenbank zugeordneten Schnittlisten, mit den sich nach den einzelnen Schnittplänen und Schnittführungen in der Reihenfolge vom Ausgangsartikel über Grobteile bis zum Endprodukt ergebenden Artikeln, ausgegeben werden.

2. Computergestütztes Verfahren zur manuellen oder/und automatisierten Zerlegung von Ausgangsartikeln in definiert vorgegebene Mengen von unterschiedlichen Artikeln als Endprodukte nach Anspruch 1, **dadurch gekennzeichnet,**
**dass** als Kriterium zur Bestimmung des optimalen Zerlegeplans ein günstiges finanzielles Ergebnis aus der Summe des Marktwerts von Artikeln vorgegeben wird.

3. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** als Kriterium zur Bestimmung des optimalen Zerlegeplans ein Gewichtsanteil von bestimmten unterschiedlichen Artikeln vorgegeben wird.

4. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** als Kriterium zur Bestimmung des optimalen Zerlegeplans ein Stückanteil von bestimmten unterschiedlichen Artikeln vorgegeben wird.

5. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** als als Kriterium zur Bestimmung des optimalen Zerlegeplans ein minimaler Anfall von Mengen unterschiedlicher Artikel anderer Endprodukte, als für die Erfüllung der Vorgaben nicht erforderliche Artikel, vorgegeben wird.

6. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** der dritte Schritt des Verfahrens mit stets kleiner werdendem Abstand der Werte der Zahlentripel der Parameter so oft wiederholt wird, bis deren Werte in einem vorgegebenen Toleranzbereich liegen.

7. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** der dritte Schritt des Verfahrens höchstens 55 mal wiederholt wird.

8. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** jeder zu variierende Parameter nur zwei Werte, einen minimalen und einen maximalen Wert als Zahlenpaar zur Berechnung einer Anzahl von Variationen durchläuft.

9. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** zur Berechnung der Ausbeute der Menge unterschiedlicher Artikel bei der Zerlegung eine, in einer Matrix als Zeile abgebildete, Schnittliste benutzt wird, deren Elemente Informationen darüber enthalten, welche unterschiedlichen Artikel in welcher Menge bei der Zerlegung nach dem jeweiligen Schnittplan entstehen.

10. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** jedes Element der Spalte der Matrix einen bestimmten Artikel und dessen bei der Zerlegung entstehenden Menge, ausgehend vom Ausgangsartikel bis zum Artikel als Endprodukt, repräsentiert.

11. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** jede Zeile einen Schnittplan mit unterschiedlicher Schnittführung abbildet.

12. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** die Elemente der Spalten Gewichtsdaten, ausgehend vom Ausgangsartikel bis zu den unterschiedlichen Artikeln als Endprodukt beinhalten.

13. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** den Elementen der Matrix weitere Einfluss- und Parametergrößen zugeordnet sind.

14. Computergestütztes Verfahren zur manuellen oder/und automatisierten Zerlegung von Ausgangsartikeln in definiert vorgegebene Mengen von unterschiedlichen Artikeln als Endprodukte nach einem der vorhergehenden Ansprüche, **dadurch gekennzeichnet,**
**dass** das Verfahren integraler Bestandteil eines ERP - Systems ist und mit dessen Modulen verknüpft ist.
